(19) Europäisches Patentamt

European Patent Office

Office européen des brevets

(11) Veröffentlichungsnummer: **0 319 715**
**A2**

## (12) EUROPÄISCHE PATENTANMELDUNG

(21) Anmeldenummer: 88118464.2

(22) Anmeldetag: 05.11.88

(51) Int. Cl.⁴: **B60T 8/32**

(30) Priorität: 05.12.87 DE 3741266

(43) Veröffentlichungstag der Anmeldung:
**14.06.89 Patentblatt 89/24**

(84) Benannte Vertragsstaaten:
**DE FR GB IT**

(71) Anmelder: **ROBERT BOSCH GMBH
Postfach 10 60 50
D-7000 Stuttgart 10(DE)**

(72) Erfinder: **Friedow, Michael
Uracher Weg 9
D-7146 Tamm(DE)**
Erfinder: **Wetzel, Gerhard
Seestrasse 56
D-7000 Stuttgart 1(DE)**

(54) Bremsanlage mit zumindest zwei Bremskreisen, vorzugsweise Diagonalbremskreisen für Vorder- und Hinterräder.

(57) Bei einer Bremsanlage mit zumindest zwei Bremskreisen, vorzugsweise Diagonalbremskreisen für Vorder- und Hinterräder, die an einem Hauptbremszylinder angeschlossen sind, soll zwischen Hauptbremszylinder und jeweilige Radbremszylinder der Vorder- bzw. Hinterräder eine Antiblockier-Regeleinheit bestehend zumindest aus einem Magnetventil und einer Rückförderpumpe eingeschaltet sein. Ferner ist zwischen einer Anschlußleitung zur Antiblockier-Regeleinheit und einer Bremsleitung zu den Hinterrädern eine Regeleinheit vorgesehen, über welche ein Hinterrad mit dem jeweils anderen Bremskreis druckbezogen verbindbar ist. In der Regeleinheit ist zumindest ein Kolben bewegbar gelagert, welcher jeweils zwei Räume voneinander trennt, wobei der eine Raum an die Anschlußleitung des einen Bremskreises angeschlossen ist, während der andere Raum mit dem anderen Bremskreis bzw. dessen Anschlußleitung in Verbindung steht.

Fig.1

EP 0 319 715 A2

## Bremsanlage mit zumindest zwei Bremskreisen, vorzugsweise Diagonalbremskreisen für Vorder- und Hinterräder

Stand der Technik

Die Erfindung betrifft eine Bremsanlage mit zumindest zwei Bremskreisen, vorzugsweise Diagonalbremskreisen für Vorder- und Hinterräder gemäß Gattung des Hauptanspruchs.

Aus der Europäischen Patentanmeldung 0 178 817 ist ein 2-Kanal-System mit Diagonalbremskreisen bekannt, bei dem jedem Vorderrad ein Modulator zugeordnet ist, über welchen auch die Versorgung der Hinterräder mit Bremsflüssigkeit gesteuert werden kann. Dieser Modulator beinhaltet eine Pumpe, die von dem entsprechenden Vorderrad angetrieben wird und welche das jeweilige Hinterrad mit einem entsprechenden Bremsdruck versorgt. Hierbei ist die Pumpe so ausgelegt, daß beim Blockieren eines Vorderrades das entsprechende Hinterrad jedoch noch drehen kann. Hierdurch ergibt sich aber eine ungünstige Verteilung der Bremswirkung.

Insbesondere beim Bremsen auf einer inhomogenen Fahrbahn, beispielsweise auf einer Fahrbahn, welche mit μ-Split belegt ist, stellt sich das Problem, daß der Radsensor des Vorderrades bereits ein Blockieren des entsprechenden Vorderrades auf dem μ-Split feststellt und damit die Antiblockier-Regelung einleitet. Durch die Antiblockier-Regelung wird der Bremsdruck sowohl in dem sensierten Vorderrad wie auch in dem diagonal dazu angeordneten Hinterrad abgesenkt. Dieses Hinterrad weist aber noch genügend Reibung mit der Fahrbahn auf, so daß durch ein Absenken seines Bremsdruckes die Gesamtbremswirkung vermindert und dadurch der Bremsweg verlängert wird.

Ein ähnliches Problem gilt auch bei Auftreten von Leckagen in einem Bremskreis, wodurch der Bremsdruck in diesem gesamten Bremskreis abgesenkt und somit die gesamte Bremswirkung dem anderen Diagonalkreis überlassen wird.

Vorteile der Erfindung

Eine Bremsanlage mit den Merkmalen des Hauptanspruchs besitzt jedoch eine Regeleinheit, welche zwischen eine Anschlußleitung zur Antiblockier-Regeleinheit und die Bremsleitung zu den jeweiligen Hinterrädern eingeschaltet ist und über welche beim Absinken des Bremsdruckes in einem Bremskreis, sei es durch vorzeitige Einschaltung der Antiblockier-Regeleinheit dieses Bremskreises oder durch das Auftreten von Leckagen, das jeweilige Hinterrad dieses Bremskreises mit absinkendem Bremsdruck mit dem anderen Bremskreis druckbezogen verbindbar ist.

Durch diese Anordnung wird erreicht, daß beim Absinken des Bremsdruckes in einem Bremskreis zumindest drei Räder weiterhin an der Bremswirkung teilnehmen, wodurch der Bremsweg erheblich verkürzt wird. Bisher fiel bei einer Bremsdruckverminderung in einem Bremskreis dieser gesamte Bremskreis aus, so daß die gesamte Aufgabe der Bremsung von dem anderen Bremskreis übernommen werden mußte.

Ein weiterer wesentlicher Vorteil der vorliegenden Erfindung besteht darin, daß bei der Verbindung des Hinterrades des Bremskreise mit absinkendem Bremsdruck mit dem anderen Bremskreis kein Austausch von Bremsflüssigkeit zwischen den beiden Bremskreisen stattfindet. Dadurch werden Kolbenverlagerungen im Hauptbremszylinder mit der Folge des Ausfalls eines Kreises verhindert.

Erfindungsgemäß soll in der Regeleinheit zumindest ein Kolben bewegbar gelagert sein, welcher jeweils zwei Räume voneinander abtrennt. Dabei steht jeweils der eine Raum mit der Anschlußleitung des einen Bremskreise und der andere Raum mit dem anderen Bremskreis bzw. dessen Anschlußleitung in Verbindung. Die Räume bzw. Kolben sind so ausgelegt, daß sich der Kolben sowohl bei einem normalen Bremsvorgang als auch bei einem durch die Antiblockier-Einheit geregelten gleichmäßigen Bremsvorgang, beispielsweise auf homogener Fahrbahn, in einer Stellung befindet, in welcher die Anschlußleitung eine direkte Verbindung zu ihrer jeweiligen Bremsleitung besitzt. Damit ist die Tätigkeit jedes Diagonalbremskreises für sich separat gewährleistet.

Andererseits ist der Kolben bzw. die Regeleinheit so ausgelegt, daß beim einem Absinken des Bremsdruckes in nur einem Bremskreis, wie dies beispielsweise durch frühzeitigere Einschaltung der Antiblockier-Regeleinheit auf μ-Split oder beim Auftreten von Leckagen in einem Bremskreis geschehen kann, der Kolben die Verbindung zwischen Anschlußleitung und jeweiliger Bremsleitung unterbricht, so daß der Bremsdruck für das entsprechende Hinterrad unabhängig von einem weiteren Absinken des Bremsdruckes für das jeweilige Vorderrad erhalten bleibt. Dabei geschieht das Schließen der Verbindung zwischen Anschlußleitung und Bremsleitung durch den Bremsdruck des anderen Bremskreises, der auf hohem Niveau bleibt.

In einem ersten Ausführungsbeispiel der Erfindung ist für jeden Bremskreis eine getrennte Regeleinheit zwischen Anschlußleitung und Bremsleitung vorgesehen. Dabei weist jede Regeleinheit einen Raum auf, welcher sowohl mit der Anschlußleitung über ein Rückschlagventil als auch mit der Bremsleitung in Verbindung steht. Das Rückschlagventil gewährleistet, daß beim Aufbau eines Bremsdruckes genügend Bremsflüssigkeit zur jeweiligen Bremsleitung gelangt, es verhindert aber einen Rückfluß dieser Bremsflüssigkeit.

Andererseits dieses Raumes zwischen Anschlußleitung und Bremsleitung soll durch den Kolben bzw. einen Teil des Kolbens ein Bodenraum ausgebildet sein, welcher eine Verbindungsleitung zu der Anschlußleitung des jeweils anderen Bremskreises aufweist. Solange die Bremsdrücke in Bodenraum und dem anderen Raum gleich sind, wie dies bei einem normalen Bremsvorgang bzw. einem geregelten Bremsvorgang auf homogener Fahrbahn, der Fall ist, wird der Kolben nicht bewegt. Um ihn hierzu in einer bestimmten Lage zu halten, stützt er sich über eine Feder gegen das Gehäuse der Regeleinheit ab. Ferner ist hierzu vorgesehen, daß der Kolben als Stufenkolben ausgebildet ist, wobei er einer Kolbenabschnitt mit einem größeren Durchmesser besitzt als ein daran angeformter Gleitkolbenabschnitt. Die Stirnfläche des Gleitkolbenabschnittes wird von dem Bremsdruck des anderen Bremskreises beaufschlagt, während die größere Stirnfläche des Kolbenabschnitts dem Raum des eigenen Bremskreises zugewandt ist. Hierdurch setzt die Regeleinheit erst nach Überschreiten einer bestimmten Druckdifferenz zwischen beiden Bremskreisen ein.

Ferner ist bevorzugt vorgesehen, daß der Stufenkolben zwischen dem Raum und dem Bodenraum einen weiteren Raum ausbildet, wobei dieser weitere Raum über entsprechende Bohrungen mit dem eigentlichen Druckraum in Verbindung steht. Der weitere Raum weist aber einen zusätzlichen Anschluß an die Anschlußleitung des eigenen Bremskreises auf, wobei hier kein Rückschlagventil zwischengeschaltet ist. Wird Bremsdruck aufgebaut, so gelangt Bremsflüssigkeit sowohl über diesen weiteren Raum und die Bohrungen in dem Stufenkolben als auch über die mit dem Rückschlagventil belegte Leitung in dem eigentlichen Druckraum und von dort in die Bremsleitung.

Erfindungsgemäß bildet die Bohrung bei ihrer Ausmündung in den Druckraum einen Ventilsitz an der Stirnfläche des Kolbenabschnitts aus, in den eine Ventilkugel paßt. Überschreitet somit die Druckdifferenz zwischen den Bremskreisen einen bestimmten Wert, so verschiebt sich der Stufenkolben gegen die Ventilkugel, so daß die Bohrung zu dem weiteren Raum verschlossen wird. Auch über das Rückschlagventil kann aus dem Druckraum keine Bremsflüssigkeit abfließen. Damit ist jede Verbindung zwischen Anschlußleitung und Bremsleitung unterbrochen, so daß auch bei einem Absinken des Bremsdruckes für das Vorderrad das jeweilige Hinterrad auf dem höheren Bremsdruckniveau bleibt. Dieser Zustand wird solange aufrecht erhalten, bis entweder der Bremsdruck des anderen Bremskreises in der Bodenkammer ebenfalls absinkt, wie dies beim Lösen der Bremse der Fall ist, oder aber der Bremsdruck auch in dem ersten Bremskreis wieder erhöht wird, so daß über das Rückschlagventil Bremsflüssigkeit in den Raum gefördert wird. Bei Überschreiten der vorbestimmten Bremsdruckdifferenz wird dann der Kolben wieder von der Ventilkugel abgehoben und der normale Bremsvorgang kann fortgesetzt werden.

In jedem Fall bleibt aber gewährleistet, daß sowohl ein Vorderrad wie auch beide Hinterräder weiterhin am Bremsvorgang teilnehmen und nur das eine sensierte Vorderrad der Antiblockier-Regelung unterliegt. Üblicherweise sind dem Hinterradbremszylindern Druckminderer vorgeschaltet. Diese Druckminderer bewirken, daß in der Regel auf die Vorderräder ein stärkerer Bremsdruck ausgeübt wird als auf die Hinterräder. In einer bevorzugten Ausführungsform der Erfindung kann der jeweilige Druckminderer der einen Bremsleitung mit seiner entsprechenden Regeleinheit gekoppelt sein. Dabei steht diese Regeleinheit bzw. deren eigentlicher Druckraum über eine Öffnung mit dem Druckminderer in Verbindung, so daß ein Durchlaß für Bremsflüssigkeit während eines ungeregelten bzw. auf homogener Fahrbahn geregelten Bremsvorganges gewährleistet bleibt. Zwischen der Regeleinheit und dem Druckminderer ist in dem gezeigten Ausführungsbeispiel der Erfindung ein Tragelement vorgesehen, welches einerseits die Ventilkugel für den Stufenkolben der Regeleinheit und andererseits eine Ventilkugel für einen weiteren Stufenkolben des Druckminderers hält. Wenn der Druckminderer offen ist, gelangt Bremsflüssigkeit über eine Längsbohrung in dem Stufenkolben in einen Raum vor dem Stufenkolben und von dort in die jeweilige Bremsleitung. Durch den Stufenkolben wird aber noch ein weiterer Raum ausgebildet, der über einen entsprechenden Aus- bzw. Einlaß mit einem Druckmedium füll- bzw. entleerbar ist. Hierdurch kann beispielsweise der Raum vor dem Stufenkolben vergrößert werden, so daß ein Druckabfall in der Bremsleitung stattfindet.

Bevorzugt soll allerdings die Regeleinheit für beide Bremskreise in einem gemeinsamen Gehäuse untergebracht sein. In diesem Fall wird dann die Regelung durch einen Kolben vorgenommen, welcher in dem Gehäuse verschiebbar lagert und beide Bremskreise durch entsprechende Dichtungselemente voneinander abdichtet. Beidseits stützt sich dieser Kolben in den entsprechenden Druckräumen gegen das Gehäuse ab, so daß sich der Kolben in Ruhelage etwa in einer mittig zentrierten Position befindet.

Ein Ausführungsbeispiel dieser gemeinsamen Regeleinheit sieht vor, daß beidseits dem Kolben Stangenstummel angeformt sind, auf welche Hülsenelemente aufgeschoben werden, die wiederum einen Ringflansch besitzten, gegen den sich dann die eben genannten Federn abstützen. Allerdings läßt der Hülsenkörper durch Freinuten in dem Ringflansch einen Durchlaß zu einem weiteren Ringraum offen, der einen direkten Anschluß an die Anschlußleitung besitzt. Dieser Anschluß besteht im vorliegenden Fall aus einer Radialbohrung, welche von dem Kolben überfahren und damit geschlossen werden kann. Durch diese Art Schieberventil ist gewährleistet, daß bei Druckabfall in einem Bremskreis sich der Kolben in Richtung des Druckraumes mit dem niedrigeren Bremsdruck verschiebt und dabei die Verbindung zur Anschlußleitung unterbricht. Eine weitere Verbindung zwischen Druckraum und Anschlußleitung ist durch ein entsprechendes Rückschlagventil gesichert. Somit ist das zu dem Bremskreis gehörende Hinterrad von der Anschlußleitung abgeschnitten und bleibt auf seinem eingestellten Druck.

Ein weiterer Vorteil dieser Anordnung liegt aber darin, daß zwischen dem nun auf das abgeschnittene Hinterrad wirkenden Bremsdruck und dem Bremsdruck in der anderen Bremsleitung ein Ausgleich durch den Kolben stattfindet, so daß sowohl auf ein Vorderrad wie auch auf beide Hinterräder der gleiche Bremsdruck ausgeübt wird. Dies führt zu einer wesentlichen Verbesserung der Stabilität des Bremsverhaltens.

In einem weiteren Ausführungsbeispiel der Erfindung wird der Kolben von einer Kolbenstange durchsetzt, über welche ein jeweiliger Einlaß als Verbindung zur Anschlußleitung hin verschließbar ist. Auch hierdurch erfolgt eine Abtrennung des Hinterrades beim Absinken des Bremsdruckes in dem entsprechenden Bremskreis.

Um nun auch hier einen Ausgleich des Bremsdruckes zwischen diesem abgeschnittenen Hinterrad und dem anderen Bremskreis zu gewährleisten, soll die Kolbenstange in dem Kolben gleitbar aufgenommen sein, wobei sie sich über Federn in dem Kolben abstützt, welche einen entsprechenden Ringkragen angreifen.

In einem sehr guten Ausführungsbeispiel der Erfindung sollen die jeweiligen Auslässe aus den Druckräumen zu den Bremsleitungen hin durch Ventilkörper bei der Bewegung des Kolbens in der Regeleinheit verschließbar sein. Dabei besteht jeder Ventilkörper aus einem Dorn, welcher in den Kolben eingreift und dort an einer Platte angeformt ist. Diese Platte ist federgelagert und deckt in Ruhelage einen Ventilsitz ab.

Vermindert sich der Bremsdruck in einem Druckraum, so verkleinert der Kolben das Volumen dieses Druckraumes bis der Dorn des Ventilkörpers den Auslaß zur Bremsleitung hin verschließt. Danach hebt die Druckplatte vom Ventilsitz ab und gibt einen Durchlaß von der Bremsleitung durch entsprechende Bohrungen im Dorn des Ventilkörpers zu einem Kanalsystem frei. Dieses Kanalsystem mündet wiederum in eine Kolbenkammer, welche andererseits einen Anschluß an die Druckkammer des anderen Bremskreises besitzt. In dieser Kolbenkammer ist ein weiterer Kolben abgedichtet angeordnet, der unter dem Druck einer Feder zu dem anderen Druckraum hin gehalten wird. Im Falle des Abhebens der Platte von dem Ventilsitz wird über dieses Kanalsystem ebenfalls ein Druckausgleich zwischen dem Bremsdruck in der Bremsleitung des abgeschnittenen Hinterrades und dem Bremsdruck in dem Druckraum des anderen Bremskreises geschaffen.

Es ist ersichtlich, daß die Regeleinheit einfach und robust aufgebaut ist und deshalb keinem Verschleiß unterliegt bzw. die Gefahr von Fehlfunktionen gering ist. Die Kreistrennung der beiden Bremskreise wird nicht aufgehoben, es findet lediglich ein Druckausgleich in den verbesserten Ausführungsformen statt, wobei selbstverständlich der Hauptbremszylinder bzw. dessen beiden getrennte Bremskammern so ausgelegt sein müssen, daß genügend Bremsflüssigkeit zur Verfügung steht, um diesen Ausgleich herbeizuführen. In keiner der Ausführungsformen ist eine bewegte Abdichtung nach außen vorgesehen, welche die Gefahr der Leckagen mit sich brächte. Es ist keine zusätzliche Servoenergie oder elektrische Ansteuerung nötig. In jedem Fall werden beide Räder auf einer Fahrzeugseite optimal abgebremst zusammen mit einem Rad auf der anderen Fahrzeugseite. Hierdurch wird auch ein besseres Fahrverhalten des Fahrzeuge trotz Bremsung gewährleistet.

Selbstverständlich ist zusätzlich auch denkbar, daß bei Absinken des Bremsdruckes in nur einem Bremskreis durch einen kurzen Druckaufbau über das Magnetventil der Antiblockier-Regeleinheit ein erhöhter Druck zu dem Hinterradbremszylinder gelangen kann, so daß die verbesserte Abbremsung des Hinterrades vom Regler und nicht vom Absinken des Bremsdruckes, beispielsweise von einer Fahrbahnänderung bzw. des auf kleinem Kraftschlußbeiwert laufenden Vorderrades bestimmt wird.

Zeichnung

Die Erfindung wird nachfolgend anhand der Zeichnung näher erläutert. Es zeigen:

Figur 1 ein Blockschaltbild einer erfindungsgemäßen Bremsanlage mit teilweise im Längsschnitt dargestellten Regeleinheiten;

Figur 2 einen vergrößert dargestellten Längsschnitt durch ein anderes Ausführungsbeispiel einer Regeleinheit gemäß Figur 1;

Figur 3 ein Blockschaltbild eines weiteren Ausführungsbeispiels einer erfindungsgemäßen Bremsanlage mit einem weiteren Ausführungsbeispiel einer Regeleinheit im Längsschnitt;

Figur 4 ein Blockschaltbild eines weiteren Ausführungsbeispiels einer Bremsanlage ähnlich Figur 3 mit im Längsschnitt dargestellter Regeleinheit;

Figur 5 ein weiteres Ausführungsbeispiel einer Bremsanlage ähnlich Figur 4 mit schematisch dargestellter Regeleinheit.

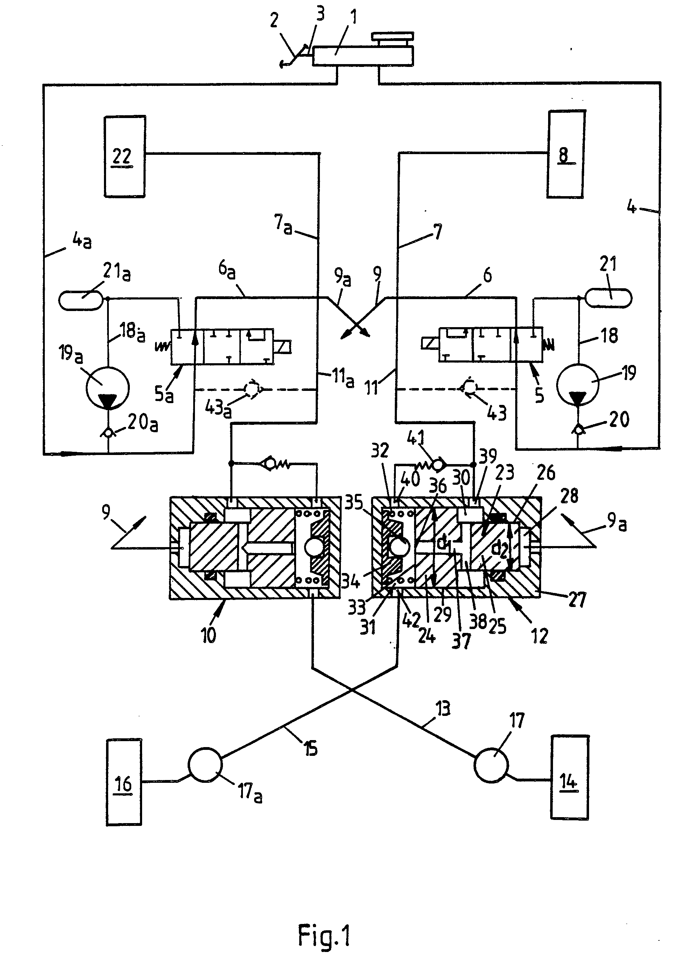

Eine erfindungsgemäße Bremsanlage weist gemäß Figur 1 einen Hauptbremszylinder 1 auf, welcher von einem Bremspedal 2 über eine Kolbenstange 3 mit Bremsdruck beaufschlagt werden kann.

Vom Hauptbremszylinder 1 führt eine Bremsleitung 4 eines ersten Bremskreises zu einem 3/3-Magnetventil 5. Dieses Magnetventil 5 ist in der gezeigten Schaltstellung über eine Leitung 6 sowie eine Zuleitung 7 direkt mit dem nicht näher gezeigten Radbremszylinder eines rechten Vorderrades 8 verbunden. Ferner besteht sowohl eine Verbindung über eine Verbindungsleitung 9 mit einer Regeleinheit 10 und über eine Anschlußleitung 11 mit einer Regeleinheit 12. Die Regeleinheit 10 ist wiederum über eine Bremsleitung 13 mit einem nicht näher gezeigten Radbremszylinder des rechten Hinterrades 14 und die Regeleinheit über eine Bremsleitung 15 mit dem linken Hinterrad 16 verbunden. In beiden Bremsleitungen 13 bzw. 15 sind ggfs. Druckminderer 17 bzw. 17a eingeschaltet.

In einer mittleren Schaltstellung des Magnetventils 5 ist die Verbindung zwischen Bremsleitung 4 und Leitung 6 unterbrochen. In der dritten Schaltstellung wird dagegen die Leitung 6 über eine Bypaßleitung 18 mit der Bremsleitung 4 verbunden, wobei in diese Bypaßleitung 18 eine Rückförderpumpe 19 sowie ein Rückschlagventil 20 eingeschaltet sind. Ferner schließt an die Bypaßleitung 18 zwischen Magnetventil 5 und Rückförderpumpe 19 noch ein Speicher 21 an.

Analog zum ersten Bremskreis zweigt von dem Hauptbremszylinder 1 ein zweiter Bremskreis ab, wobei die Elemente dieses Bremskreises den Elementen des ersten Bremskreises entsprechen und deshalb mit den gleichen Bezugszahlen unte Hinzufügung von "a" gekennzeichnet sind. Über die Bremsleitung 4a und das Magnetventil 5a sowie die Leitung 6a und die Zuleitung 7a wird das linke Vorderrad 22 direkt mit Bremsflüssigkeit versorgt. Die Verbindungsleitung 9a führt zur Regeleinheit 12, während die Anschlußleitung 11a eine Verbindung zur Regeleinheit 10 herstellt. Dies bedeutet, daß es sich im vorliegenden Fall um ein Diagonalkreisbremssystem handelt mit einer sogenannten 2-Kanal-Antiblockiersystem-Anlage, welche nach dem Rückförderprinzip arbeitet.

Da die Regeleinheiten 10 und 12 identisch ausgebildet sind, wird nachfolgend nur die Regeleinheit 12 beschrieben. Dieselbe Beschreibung gilt natürlich auch für die Regeleinheit 10.

In der Regeleinheit 12 ist ein Stufenkolben 23 angeordnet. Dieser Stufenkolben 23 besteht aus einem Kolbenabschnitt 24 mit einem Durchmesser $d_1$. An den Kolbenabschnitt 24 schließt ein Gleitkolbenabschnitt 25 an, welcher einen Durchmesser $d_2$ besitzt. Diesem Durchmesser $d_2$ ist eine entsprechende Kammerbohrung 26 in einem Gehäuse 27 der Regeleinheit 12 angepaßt, wobei sich an die Kammerbohrung 26 noch ein Bodenraum 28 anschließt. In seiner Endlage greift der Gleitkolbenabschnitt 25 noch ein Stück weit in eine Hauptkammer 29 der Regeleinheit 12 ein und schließt dort an den Kolbenabschnitt 24 an. Dieser Kolbenabschnitt 24 unterteilt die Hauptkammer 29 in einen Raum 30 und einen Raum 31. In dieser Lage wird er durch eine Feder 32 gehalten. Dabei stützt sich die Feder 32 einerseits gegen die Stirnfläche 33 des Kolbenabschnitts 24 und andererseits gegen einen Ringkragen einer Schale 34 ab, welche eine Ventilkugel 35 hält. Dieser Ventilkugel 35 ist in der Stirnfläche 33 des Kolbenabschnitts 24 ein Ventilsitz 36 zugeordnet, so daß die Ventilkugel 35 nach Einnahme ihrer Stellung im Ventilsitz 36 eine Axialbohrung 37 in dem Stufenkolben 23 verschließt. Diese Axialbohrung 37 steht über eine Querbohrung 38 mit dem Raum 30 in Verbindung. Hebt der Ventilsitz 36 von der Ventilkugel 35 ab, so besteht über die Querbohrung 38 bzw. die Axialbohrung 37 eine Verbindung von Raum 30 zu Raum 31.

In den Bodenraum 28 mündet die Verbindungsleitung 9a ein, so daß dieser Bodenraum 28 direkt an den zweiten Bremskreis angeschlossen ist. Dagegen besitzen sowohl Raum 30 wie auch Raum 31 entsprechende Anschlußbohrungen 39 und 40 zu der Anschlußleitung 11 des ersten Bremskreises. Dabei steht der Raum 31 über die Anschlußbohrung 40 und über ein Rückschlagventil 41 mit der Anschlußleitung 11 in Verbindung, während der Raum 30 direkt angeschlossen ist.

Aus dem Raum 31 mündet ferner ein Auslaß 42, der mit der Bremsleitung 15 zum linken Hinterrad 16 in Verbindung steht.

Der Durchmesser $d_1$ des Kolbenabschnitts 24 ist größer als der Durchmesser $d_2$ des Gleitkolbenabschnitts 25. Bei einem normalen Bremsvorgang werden sowohl Raum 30 wie auch Raum 31 über die Anschlußleitung 11 mit Bremsdruck aus dem ersten Bremskreis beaufschlagt. Der Bodenraum 28 unterliegt dagegen dem Druck aus dem zweiten Bremskreis über die Verbindungsleitung 9a. Bei einem ungeregelten Bremsvorgang, d. h. ohne Einschaltung des Antiblockier-Systems, sind die Bremsdrücke in Raum 30 und Raum 31 gleich, d. h. der Stufenkolben 23 wird durch die Feder 32 in seiner gezeigten Ausgangsstellung gehalten.

Stellen nun nicht gezeigte Sensoren an den Vorderrädern gleichzeitig ein Blockieren der Vorderräder fest, wie dies bei einer homogenen Fahrbahn der Fall sein sollte, so schalten die Magnetventile 5 und 5a gleichzeitig in den ABS-Regelbetrieb, so daß der Bremsdruck in beiden Bremskreisen erniedrigt wird. In diesem Fall ist die Verminderung des Bremsdruckes in beiden Bremskreisen gleich groß. Damit ändert sich aber an den Druckverhältnissen am Stufenkolben 23 nichts, der Stufenkolben 23 liegt weiterhin in der in Figur 1 gezeigten Ausgangsstellung und die Hinterräder 14 und 16 werden mit dem gleichen Druck wie die Vorderräder beaufschlagt, da über die Anschlußleitung 11 sowohl Raum 3 als auch Raum 30 mit Bremsflüssigkeit versorgt werden und die Räume 30 und 31 über die Querbohrung 38 und die Axialbohrung 37 miteinander kommunizieren. Eine Druckminderung kann hier ggfs. durch die in den Bremsleitungen 13 bzw. 15 eingeschalteten Druckminderer 17 bzw. 17a erfolgen.

Ist die Fahrbahn dagegen inhomogen, beispielsweise mit einem μ-Split belegt, so kommt es zu einem früheren Blockieren desjenigen Vorderrades, welches als erstes auf diesen μ-Split gelangt. In diesem Fall beginnt die Antiblockier-Regelung für dieses Vorderrad früher, d. h. der Bremsdruck an diesem Vorderrad wid früher abgesenkt als derjenige an dem anderen Vorderrad.

Damit wird jedoch auch der Bremsdruck in den Räumen 30 und 31 vermindert, während der Bodenraum 28 unter dem höheren Bremsdruck des anderen Bremskreises steht.

Nach Überschreiten einer bestimmten Druckdifferenz, die auch von der Spannung der Feder 32 mitbestimmt wird, verschiebt sich der Stufenkolben 23, während der Raum 31 verkleinert wird. In Endlage des Stufenkolbens 23 trifft der Ventilsitz 36 auf die Ventilkugel 35, so daß die Verbindung von Raum 31 zu Raum 30 geschlossen wird. Hierdurch ist nun das jeweilige Hinterrad 14 bzw. 16 von seinem jeweiligen Bremskreis abgeschnitten, so daß der Bremsdruck in der Bremsleitung 13 bzw. 15 gehalten werden kann. Ggfs. kann der Bremsdruck sogar über Zuleitung von Bremsflüssigkeit über das Rückschlagventil 41 noch gesteigert werden. Dies geschieht natürlich nur, wenn der Bremsdruck in diesem Bremskreis wieder erhöht wird. Bei einer weiteren Absenkung des Bremsdruckes durch die Rückförderpumpe 19 bleibt dagegen auf jeden Fall der ursprüngliche Bremsdruck auf dem Hinterrad 14 bzw. 16 erhalten, der sich zu dem Zeitpunkt eingestellt hatte, kurz bevor der Ventilsitz 36 auf die Ventilkugel 35 traf.

Findet nun in dem anderen Bremskreis ebenfalls eine Antiblockier-Regelung statt, so erniedrigt sich im Laufe der Zeit auch der Bremsdruck in der Bodenkammer 28. Wenn er sich so weit erniedrigt hat, daß er geringer ist als der Druck im Raum 30, so hebt der Ventilsitz 36 von der Ventilkugel 35 ab, da der Druck im Raum 31, der noch dem ursprünglichen Bremsdruck auf das jeweilige Hinterrad 14 bzw. 16 entspricht, gleich oder höher ist als der Druck im Raum 30.

Parallel zum Magnetventil 5 ist noch ein weiteres Rückschlagventil 43 vorgesehen. Wird während einer Antiblo kier-Regelung der Bremsdruck plötzlich aufgehoben, so kann der in dem jeweiligen Bremskreis vorhandene Bremsdruck über dieses Rückschlagventil 43 ausgeglichen werden. Damit wird aber auch der Bremsdruck in dem Raum 30 und im Bodenraum 28 aufgehoben. Da aber nach wie vor im Raum 31 der ursprüngliche Bremsdruck aufrecht erhalten wird, hebt sofort der Ventilsitz 36 von der Ventilkugel 35 ab, so daß auch sofort der Bremsdruck auf die Radbremszylinder der Hinterräder 14 bzw. 16 nachläßt.

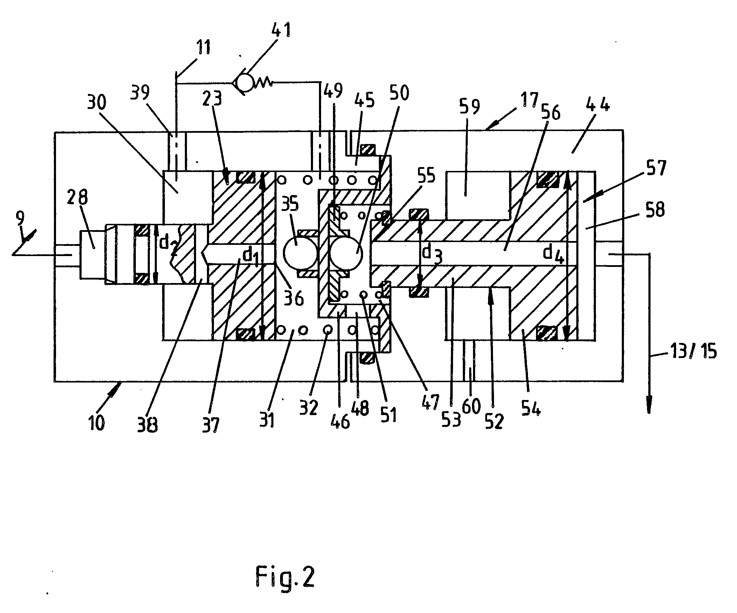

In Figur 2 ist ein Ausführungsbeispiel gezeigt, bei welchem der Druckminderer 17 direkt mit der entsprechenden Regeleinheit 10 kombiniert ist. Hierzu ist ein Gehäuse 44 des Druckminderers 17 einem Ringkragen 45 der Regeleinheit 10 aufgeschoben. Die Ventilkugel 35 wird hier von einem hutförmigen Tragelement 46 gehalten, welches andererseits der Ventilkugel 35 eine Aufnahmemulde 47 ausbildet. Diese Aufnahmemulde 47 steht über Öffnungen 48 mit dem Raum 31 in Verbindung.

Andererseits der Ventilkugel 35 ist in den Boden der Aufnahmemulde 47 eine weitere, von einem Tragflansch 49 gehaltene Ventilkugel 50 eingesetzt. Gegen die Kraft einer Feder 51 kann hier ein Stufenkolben 52 des Druckminderers 17 verschoben werden, wobei auch dieser Stufenkolben 52 aus einem Gleitkolbenabschnitt 53 sowie einem Kolbenabschnitt 54 besteht. Der Gleitkolbenabschnitt 53 weist einen Durchmesser $d_3$ auf, der kleiner ist als der Durchmesser $d_4$ des Kolbenabschnitts 54.

Der Stufenkolben 52 kann gegen den Druck der Feder 51 in der Aufnahmemulde 47 gleiten und trifft dann mit einem Ventilsitz 55 auf die Ventilkugel 50. Hierdurch wird eine Längsbohrung 56 in dem Stufenkolben 52 verschlossen, über welche die Bremsleitung 13 mit dem Raum 31 über die Öffnungen 48 in Verbindung steht.

Der Kolbenabschnitt 54 gleitet in einer Kolbenkammer 57 und teilt diese in einen Raum 58 und einen geschlossenen Raum 59 auf. In den Raum 58 mündet sowohl die Längsbohrung 56 wie auch die Bremsleitung 13, während der Raum 59 einen Aus- bzw. Einlaß für ein Druckmedium besitzt.

Bei Beginn der Bremstätigkeit wirkt der Bremsdruck über die Öffnungen 48 und die Längsbohrung 56 im Stufenkolben 52 ungemindert an der Hinterachse über die Bremsleitungen 13/15. Kurz vor Erreichen des Umschaltdruckes verschiebt sich der Stufenkolben 52 gegen die vorgespannte Feder 51 und verschließt den Durchgang zwischen Ventilsitz 55 und Ventilkugel 50. Bei weiterem Druckanstieg im Eingang bewegt sich der Stufenkolben in rascher Folge hin und her, wobei er den Durchgang am Ventilsitz 55 ständig öffnet und schließt. Bei diesem Vorgang wird der hydraulische Überdruck entsprechend dem Flächenverhältnis der beiden Durchmesser $d_3$ und $d_4$ von Gleitkolbenabschnitt 53 und Kolbenabschnitt 54 am Stufenkolben 52 gemindert.

Bei Druckabbau im Eingang verschiebt die Druckfeder 51 den Stufenkolben 52 wieder in seine Ausgangsstellung zurück.

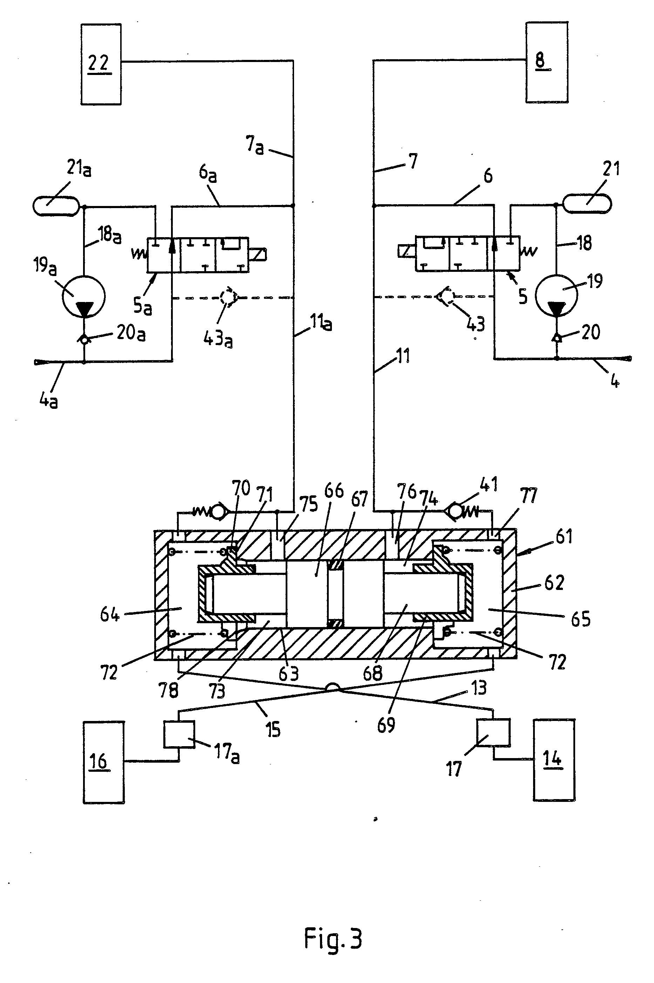

Gemäß dem Ausführungsbeispiel der Bremsanlage nach Figur 3 ist für beide Bremskreise nur eine Regeleinheit 61 vorgesehen. Diese besteht aus einem Gehäuse 62, welches eine mittige Zylinderbohrung 63 besitzt, die von einem Raum 64 zu einem Raum 65 reicht. In dieser Zylinderbohrung 63 lagert ein Kolben 66, wobei er die Räume 64 und 65 durch eine Ringdichtung 67 voneinander trennt. Von diesem Kolben 66 ragen beidseits Stangenstummel 68 ab, denen eine Hülse 69 aufgesetzt ist. Diese Hülse 69 schlägt mit einem Ringflansch 70 an einer Schulter 71 an, welche beim Übergang von Raum 64 bzw. 65 zu Zylinderbohrung 63 ausgebildet ist. Über diesen Ringflansch 70 stützt sich die Hülse 69 über eine Feder 72 gegen das Gehäuse 62 ab.

In der Figur 3 gezeigten Ausgangslage werden durch diese Anordnung beidseits des Kolbens 66 wiederum nicht nur die Räume 64 und 65 ausgebildet, sondern zwischen Ringflansch 70 und Kolben 66 auch weitere Ringräume 73 und 74 innerhalb der Zylinderbohrung 63. Diese Ringräume 73 und 74 stehen über Radialbohrungen 75 und 76 direkt mit der jeweiligen Anschlußleitung 11a bzw. 11 in Verbindung Die Räume 64 und 65 weisen dagegen jeder eine Anschlußbohrung 77 auf, welche über das Rückschlagventil 41 ebenfalls mit der Anschlußleitung 11 bzw. 11a in Verbindung steht. Die Radialbohrungen 75 und 76 bilden zusammen mit dem Kolben 66 ein Schieberventil.

In Ausgangslage ist der Kolben 66 durch die Federn 72 etwa in der in Figur 3 gezeigten Mittellage zentriert. Die Anschlußleitung 11 bzw. 11a zu dem jeweiligen Vorderrad 8 bzw. 22 mündet direkt bzw. über das Rückschlagventil 41 in die Ringräume 73 bzw. 74 und in die Räume 64 bzw. 65. Ebenso sind die Bremsleitungen 13 bzw. 15 mit dem entsprechenden Raum 64 bzw. 65 verbunden. Die Kreistrennung wird durch die Ringdichtung 67 gewährleistet. Die Verbindung zwischen Ringraum 73 und Raum 64 bzw. Ringraum 74 und Raum 65 wird durch entsprechende Freinuten 78 im Ringflansch 70 gewährleistet.

Im Falle eines normalen Bremsvorganges werden die Räume 64/73 bzw. 65/74 rechts und links vom Kolben 66 mit dem gleichen Bremsdruck beaufschlagt, so daß der Kolben 66 seine Mittelstellung beibehält. Dies gilt auch im Falle einer Antiblockier-Regelung auf homogener Fahrbahn. Auch hier nimmt der Druck in allen Räumen gleichmäßig ab, so daß der Kolben 66 seine Lage nicht ändert.

Sollte jedoch die Fahrbahn inhomogen werden, d. h. beispielsweise mit μ-Split belegt sein, so wirken auf die Räume links und rechts vom Kolben 66 unterschiedliche Bremsdrücke, d. h. der Kolben 66 verschiebt sich zu den Räumen mit niedrigerem Bremsdruck hin und schließt dabei durch Überfahren die entsprechende Radialbohrung 75 bzw. 76. Damit wird aber die Verbindung von Vorderrad zu Hinterrad unterbrochen und der Bremsdruck am entsprechenden Hinterrad infolge der Anordnung des Rückschlagventils 41 aufrecht erhalten. Über den Kolben 66 findet jetzt ein Druckausgleich zwischen dem Hinterrad des geregelten Bremskreises und dem Vorder- und Hinterrad des umgeregelten Bremskreises statt. Voraussetzung dafür ist natürlich, daß die Volumina der Regeleinheit 61 und vom entsprechenden Hauptbremszylinder 1 so ausgelegt sind, daß in der Diagonale des Bremskreises ein Vorderrad und zwei Hinterräder mit dem notwendigen entsprechenden Bremsdruck versorgt werden können.

Gelangt beispielsweise das rechte Vorderrad 8 auf μ-Split und wird hierdurch über den an dem Vorderrad 8 befindlichen Sensor die Antiblockier-Regelung in Gang gesetzt, so läßt der Druck in dem Ringraum 74 bzw. dem Raum 65 nach und der Kolben 66 verschiebt sich nach rechts. Dabei überfährt er die Radialbohrung 76 und trennt das linke Hinterrad 16 vom Bremskreis des rechten Vorderrades 8. Auf den Kolben 66 wirkt allerdings der Bremsdruck des zweiten Bremskreises, so daß der Kolben 66 einen Ausgleich zwischen den auf die beiden Hinterräder 14 bzw. 16 und das linke Vorderrad 22 einwirkenden Bremsdruck sucht. Damit werden die Räder auf der linken Fahrzeugseite, d. h. das linke Vorderrad 22 und das linke Hinterrad 16 optimal gebremst, während auf der rechten Fahrzeugseite das Vorderrad 8 optimal geregelt, das Hinterrad 14 dagegen, wenn es ebenfalls auf μ-Split gerät, blockiert wird.

Sollte beispielsweise der erste Bremskreis mit dem rechten Vorderrad 8 ausfallen, so tritt selbstverständlich der gleiche Zustand ein, d. h. der Kolben 66 schließt die Radialbohrung 76, so daß das linke Hinterrad 16 unter den Bremsdruck des zweiten Bremskreises gerät. Dies bedeutet, daß die Regeleinheit 61 auch beispielsweise bei Kreisausfall immer noch eine verbesserte Abbremsung bewirkt, da anstatt von nur zwei Rädern eines Bremskreises drei Räder gebremst werden.

Sollten sich die Fahrbahnverhältnisse so ändern, daß die Antiblockier-Regelung aufgehoben und der Bremsdruck im ersten Bremskreis ähnlich demjenigen im zweiten Bremskreis ist, so kann über das Rückschlagventil 41 sofort ein höherer Bremsdruck auf den Raum 65 wirksam werden, selbst wenn der Kolben noch nicht in seiner Mittelstellung ist und noch die Radialbohrung 76 verschließt. Durch den dann im Raum 65 wirksam werdenden Bremsdruck wird im übrigen der Kolben 66 sehr schnell in seine Mittellage verbracht.

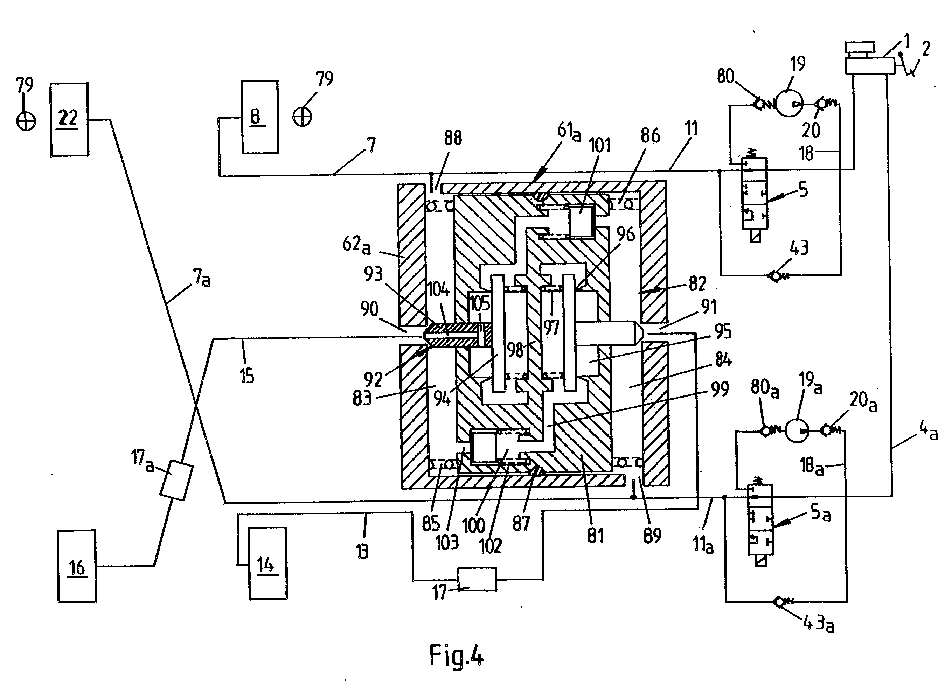

Auch nach dem Ausführungsbeispiel gemäß Figur 4 ist die Regeleinheit 61a für beide Bremskreise in einem Gehäuse untergebracht. Die übrigen Elemente entsprechen denjenigen aus Figur 1 und 3, wobei lediglich an den beiden Vorderrädern 8 und 22 Radsensoren 79 angedeutet sind. Ferner ist zwischen das Magnetventil 5 und die Rückförderpumpe 19 noch ein zusätzliches Rückschlagventil 80 eingeschaltet.

Auch in dem Ausführungsbeispiel nach Figur 4 handelt es sich um ein übliches Diagonalkreisbremssytem, dem das Antiblockier-System als Add-on-Komponente aufgepackt ist. Die Hinterräder 14 bzw. 16 werden über die Druckminderer 17 und 17a druckmäßig nachgeführt.

Die Bremsdrücke, die vom Hauptbremszylinder 1 aus als Vordrücke für jeden Diagonalbremskreis anstehen, werden durch das entsprechende 3/3-Magnetventil 5 bzw. 5a moduliert und direkt den entsprechenden, nicht gezeigten Vorderradbremszylindern über die Zuleitungen 7 bzw. 7a zugeführt. Da nur die Vorderräder 8 bzw. 22 sensiert werden, wird durch das entsprechende Magnetventil 5 bzw. 5a zugehörigen Vorderrad 8 bzw. 22 der jeweils maximal mögliche, dem Reibbeiwert entsprechende Bremsdruck zugeführt. Ein Druckunterschied zwischen den beiden Vorderrädern 8 bzw. 22 weist auf eine inhomogene Fahrbahnoberfläche hin, wie dies beispielsweise bei einer Fahrbahnoberfläche mit µ-Split-Belegung der Fall ist.

Ferner wirken die modulierten Bremskreisdrücke bzw. die auf die Vorderradbremszylinder wirkenden Bremsdrücke auf gegenüberliegende Seiten eines sich in der Regeleinheit 61a befindlichen Kolbens 81. Hierzu wird in der Regeleinheit 61a durch den Kolben 81 eine Kolbenkammer 82 in zwei Räume 83 und 84 aufgeteilt. In jedem Raum 83 bzw. 84 stützt sich der Kolben 81 über entsprechende Federn 85 bzw. 86 gegen das Gehäuse 62 ab. Dadurch ist der Kolben 81 in einer Mittelstellung zentriert, wobei die beiden Räume 83 bzw. 84 über ein entsprechendes Dichtelement 87 voneinander getrennt sind.

Tritt ein Druckunterschied in den beiden Bremskreisen auf, so bewegt sich der Kolben 81 entweder nach links oder nach rechts und verkleinert so den entsprechenden Raum 83 bzw. 84 mit niedrigerem Bremsdruck.

Jeder Raum 83 bzw. 84 steht über einen entsprechenden Einlaß 88 bzw. 89 mit der Anschlußleitung 11 bzw. 11a seines Bremskreises in Verbindung. Ferner weist jeder Raum 83 bzw. 84 einen Auslaß 90 bzw. 91 auf, der mit der entsprechenden Bremsleitung 13 bzw. 15 zu seinem Hinterrad 14 bzw. 16 in Verbindung steht.

Zum Verschließen dieses Auslasses 90 bzw. 91 ist jeweils ein Ventilkörper 92 vorgesehen, der aus einem Dorn 93 und einer Platte 94 besteht. Der Dorn 93 greift in den Kolben 81 ein und durchfährt dort eine Ausgleichskammer 95, bevor er an die Platte 94 angeformt ist. Diese Ausgleichskammer 95 bildet einen Ventilsitz 96, dem in Ausgangslage die Platte 94 abdichtend anliegt. Damit die Platte 94 auf dem Ventilsitz 96 gehalten wird, ist sie über eine Feder 97 gegen eine Mittelwand 98 in dem Kolben 81 vorgespannt.

Wird die Platte 94 von dem Ventilsitz 96 abgehoben, so wird ein Weg zu einem Kanalsystem 99 freigegeben, welches in eine Kolbenkammer 100 einmündet. In dieser Kolbenkammer 100 lagert ein Ausgleichskolben 101, welcher unter dem Druck einer Feder 102 gegen eine Verbindungsbohrung 103 zum jeweils anderen Raum 83 bzw. 84 hin vorgespannt ist.

Bei ungeregelter Bremsung bleibt der Kolben 81 in seiner Mittelstellung und der Bremsdruck wird gleichmäßig über die Zuleitungen 7 bzw. 7a auf die Vorderräder 8 und 22 sowie über die Räume 83 bzw. 84 und die Bremsleitung 13 bzw. 15 auf die Hinterräder 14 bzw. 16 verteilt. Dabei können die entsprechenden Druckminderer 17 bzw. 17a für die Hinterräder 14 bzw. 16 eine Druckminderung vornehmen.

Auch bei Einschaltung der Antiblockier-Regelung bei homogener Fahrbahn sind die Bremsdrücke in beiden Bremskreisen gleich, so daß nach wie vor der Kolben 81 in seiner Mittelstellung bleibt und lediglich die Magnetventile 5 bzw. 5a die Antiblockier-Regelung übernehmen.

Gerät jedoch während einer Antiblockier-Regelung das Fahrzeug beispielsweise rechtsseitig auf eine Fahrbahn mit deutlich verringertem µ-Wert (µ-Split-Bedingung), so wird durch das Magnetventil 5 der Druck für das rechte Vorderrad 8 in höherem Umfang verringert. Überschreitet die Druckdifferenz zwischen beiden Bremskreisen einen vorbestimmten Schwellenwert, so bewegt sich der Kolben 81 gegen den Druck der Feder 85 nach links und vermindert das Volumen des Raumes 83.

Nach kurzer Wegstrecke trifft der Dorn 93 des Ventilkörpers 92 auf den Auslaß 90 und sperrt die Bremsleitung 15. Damit vermindert sich der Bremsdruck für das Hinterrad 16 nicht weiter, so daß für dieses Hinterrad 16 ein relativ hoher Bremsdruck beibehalten wird.

Anschließend hebt die Platte 94 des Ventilkörpers 92 von dem Ventilsitz 96 ab und gibt den Weg über das Kanalsystem 99 zur Kolbenkammer 100 frei. Die Bremsleitung 15 steht dabei mit dem Kanalsystem 99 über eine Axialbohrung 104 bzw. eine in die Ausgleichskammer 95 einmündende Querbohrung 105 in Verbindung.

Sollte zwischen dem Bremsdruck in der Bremsleitung 15 und dem Bremsdruck in dem Raum 84 ein Unterschied bestehen, so wird dieser Unterschied durch den Ausgleichskolben 101 ausgeglichen, der sich je nach Druckunterschied gegen die Kraft der Feder 102 in der Kolbenkammer 100 bewegt.

Somit sind auch bei derart auftretenden Bedingungen zumindest drei Räder, nämlich ein Vorderrad und die beiden Hinterräder mit höherem Bremsdruck beaufschlagt. Dies führt zu einer deutlichen Bremswegverkürzung. Die Hinterräder 14 und 16 werden dabei weiterhin über die Druckminderer 17 bzw. 17a nachgeführt, so daß die Fahrzeugstabilität gewährleistet ist.

Die Ausgleichskolben 101 bewirken, daß keine Bremsflüssigkeit von einem Bremskreis in den anderen gelangt, sondern eine klare Bremskreistrennung erhalten bleibt. Dies verhindert mögliche Kolbenverlagerungen im Hauptbremszylinder 1, was einen Ausfall eines Kreises ermöglichen könnte. Zudem bleibt bei einer auftretenden Leckage beispielsweise an einem Hinterradbremszylinder das davon nicht betroffene Diagonalbremssystem unberührt. Der Kolbenweg des Ausgleichskolbens 101 ist so bemessen, daß der Bremsdruckaufbau des zugehörigen Hinterrades immer möglich bleibt, jedoch nur soviel Bremsflüssigkeit benötigt wird, daß die Bremsung des von dem Reibwertunterschied unberührt gelassenen Bremskreises unbeeinflußt bleibt.

Beim Auftreten einer Leckage an einem der Vorderradbremszylinder 8 bzw. 22 sind demgegenüber sogar drei Räder bremsbar, da auch hier durch den entsprechenden Ventilkörper 92 das zu diesem Vorderrad gehörende Hinterrad vom Bremskreis abgekoppelt wird. Damit bleiben immer drei Räder bremsbar, nämlich einmal die Räder des von dem Druckunterschied unberührten Bremskreissystems und das Hinterrad des anderen Bremskreissystems. Dies bringt eine erhebliche Erhöhung der Sicherheit mit sich. Dieser Vorteil trifft auch im nicht geregelten Betrieb zu. Bei Bremsung während einer Kurvenfahrt kann zudem eine geringere Neigung des Fahrzeuges zum Untersteuern erreicht werden, da das kurvenäußere Hinterrad nicht stark ungebremst bleibt.

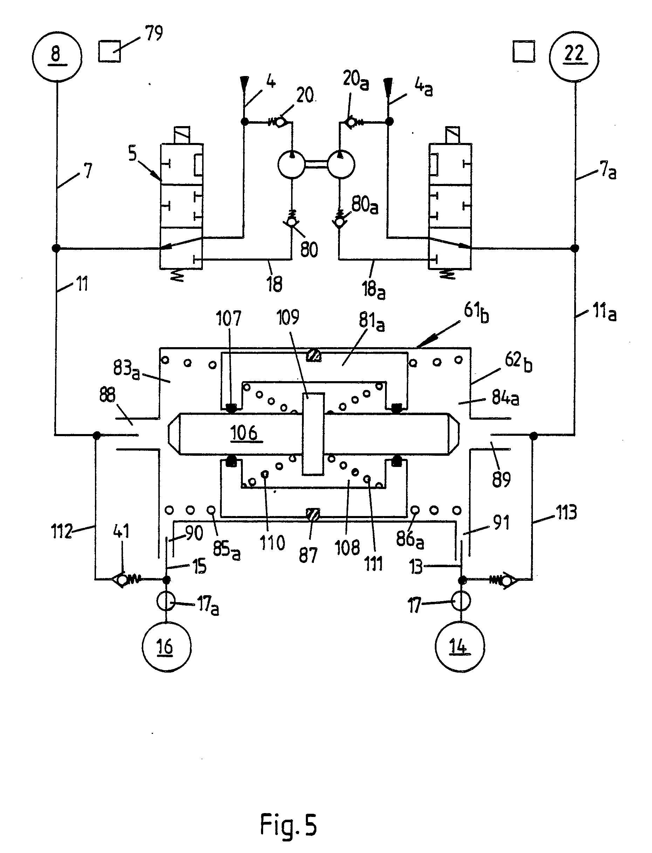

In einem vereinfacht dargestellten Ausführungsbeispiel gemäß Figur 5 ist ebenfalls die Regeleinheit 61b in einem gemeinsamen Gehäuse 62b untergebracht. Die entsprechenden Räume 83a und 84a befinden sich wiederum links und rechts von einem Kolben 81a. Dieser stützt sich in jedem Raum 83a und 84a über entsprechende Federn 85a und 86a gegen das Gehäuse 62b ab. Dabei werden die Räume 83a und 84a durch das Dichtelement 87 gegeneinander abgedichtet.

Den Kolben 81a durchsetzt eine Ventilstange 106, welche in den Kolben 81a über Dichtringe 107 geführt ist.

In dem Kolben 81a ist ein Bewegungsraum 108 ausgebildet, in welchem ein der Kolbenstange 106 angeformter Ringkragen 109 bewegbar lagert. Beidseits stützt sich dieser Ringkragen 109 über entsprechende Federn 110 und 111 gegen den Bewegungsraum 108 ab.

Bei auftretenden Druckunterschieden innerhalb der Bremskreissysteme infolge inhomogener Fahrbahn oder beispielsweise auftretender Leckagen verschiebt sich der Kolben 81a aus seiner Mittelstellung, wobei die Kolbenstange 106 den Einlaß 88 bzw. 89 verschließt. Dadurch wird das jeweilige Hinterrad 14 bzw. 16 von seinem jeweiligen Bremskreis abgekoppelt, so daß es unter höherem Bremsdruck verbleibt. Den Ausgleich zwischen dem Bremsdruck dieses Hinterrades und dem anderen Bremskreis übernimmt dann der Kolben 81a, welcher dann im Verhältnis zur Kolbenstange 106 gegen die Kraft der entsprechenden Feder 110 bzw. 111 verschoben wird. Hierdurch verbleibt zumindest ein Vorderrad und die beiden Hinterräder unter dem gleichen Bremsdruck, so daß der Bremsweg wesentlich verkürzt wird, dabei aber eine ausreichende Stabilität des Fahrverhaltens gewährleistet ist.

## Ansprüche

1. Bremsanlage mit zumindest zwei Bremskreisen, vorzugsweise Diagonalbremskreisen für Vorder- und Hinterräder, die an einem Hauptbremszylinder angeschlossen sind, wobei zwischen Hauptbremszylinder und jeweilige Radbremszylinder der Vorder- bzw. Hinterräder eine Antiblockier-Regeleinheit bestehend zumindest aus einem Magnetventil und einer Rückförderpumpe eingeschaltet ist, dadurch gekennzeichnet, daß zwischen eine Anschlußleitung (11) zur Antiblockier-Regeleinheit (5,19) und einer Bremsleitung (13,15) zu den Hinterrädern (14,16) eine Regeleinheit (10,12,61) eingeschaltet ist, über welche ein Hinterrad (14 bzw. 16) mit dem jeweils anderen Bremskreis druckbezogen verbindbar ist.

2. Bremsanlage nach Anspruch 1, dadurch gekennzeichnet, daß in der Regeleinheit (10,12,61) zumindest ein Kolben (23,66,81) bewegbar lagert, welcher jeweils zwei Räume (31 und 28 bzw. 64 und 65 bzw. 83 und 84) voneinander trennt.

3. Bremsanlage nach Anspruch 2, dadurch gekennzeichnet, daß der eine Raum (31,65,83) an die Anschlußleitung (11) des einen Bremskreises angeschlossen ist, während der andere Raum (28,64,84) mit dem anderen Bremskreis bzw. der Anschlußleitung (11a) in Verbindung steht.

4. Bremsanlage nach einem der Ansprüche 1 bis 3, dadurch gekennzeichnet, daß für jeden Bremskreis eine getrennte Regeleinheit (10,12) zwischen Anschlußleitung (11,11a) und Bremsleitung (13,15) vorgesehen ist.

5. Bremsanlage nach Anspruch 4, dadurch gekennzeichnet, daß jede Regeleinheit (10,12) einen Raum (31) aufweist, welcher sowohl mit der Anschlußleitung (11, 11a) über ein Rückschlagventil (41) als auch mit der Bremsleitung (13,15) in Verbindung steht.

6. Bremsanlage nach Anspruch 5, dadurch gekennzeichnet, daß jede Regeleinheit (10,12) andererseits des Raumes (31) einen Bodenraum (28) aufweist, welcher über eine Verbindungsleitung (9 bzw. 9a) mit der Anschlußleitung (11 bzw. 11a) des jeweils anderen Bremskreises in Verbindung steht.

7. Bremsanlage nach Anspruch 6, dadurch gekennzeichnet, daß der Kolben (23) sich im Raum (31) über eine Feder (32) gegen ein Gehäuse (27) der Regeleinheit (10,12) abstützt.

8. Bremsanlage nach Anspruch 7, dadurch gekennzeichnet, daß der Kolben (23) als Stufenkolben ausgebildet ist, wobei zwischen dem Raum (31) und dem Bodenraum (28) ein weiterer Raum (30) vorgesehen ist, der über Bohrungen (38,37) mit dem Raum (31) in Verbindung steht und eine Anschlußbohrung (39) an die Anschlußleitung (11,11a) aufweist.

9. Bremsanlage nach Anspruch 8, dadurch gekennzeichnet, daß eine Bohrung (37) beim Ausmünden aus dem Stufenkolben (23) in den Raum (31) einen Ventilsitz (36) ausbildet, welcher zusammen mit einer in dem Raum (31) gehaltenen Ventilkugel (35) ein Sitzventil ausbildet.

10. Bremsanlage nach Anspruch 8 oder 9, dadurch gekennzeichnet, daß der Stufenkolben (23) aus einem Kolbenabschnitt (24) mit dem Durchmesser $(d_1)$ und einem Gleitkolbenabschnitt (25) mit dem Durchmesser $(d_2)$ besteht, wobei der Durchmesser $(d_1)$ größer ist als der Durchmesser $(d_2)$, der von dem Bremsdruck in der Bodenkammer (28) beaufschlagt ist.

11. Bremsanlage nach wenigstens einem der Ansprüche 4 bis 10, dadurch gekennzeichnet, daß in die Bremsleitung (13,15) ein Druckminderer (17,17a) eingeschaltet ist.

12. Bremsanlage nach Anspruch 11, dadurch gekennzeichnet, daß der Druckminderer (17,17a) direkt mit der Regeleinheit (10,12) gekoppelt ist, wobei zwischen Raum (31) und dem Druckminderer (17) zumindest eine Öffnung (48) als Durchlaß für Bremsflüssigkeit vorgesehen ist.

13. Bremsanlage nach Anspruch 12, dadurch gekennzeichnet, daß die Öffnung (48) in einer Wand eines Tragelementes (46) gebildet ist, welches einerseits die Ventilkugel (35) und andererseits eine weitere Ventilkugel (50) hält, über die eine Längsbohrung (56) in einem weiteren Stufenkolben (52) verschließbar ist, wobei diese Längsbohrung (56) in einem Raum (58) einmündet, aus dem die Bremsleitung (13,15) führt.

14. Bremsanlage nach Anspruch 13, dadurch gekennzeichnet, daß der Stufenkolben (52) andererseits des Raumes (58) einen weiteren Raum (59) ausbildet, der über einen Aus- bzw. Einlaß (60) mit einem Druckmedium füll- bzw. entleerbar ist.

15. Bremsanlage nach einem der Ansprüche 1 bis 3, dadurch gekennzeichnet, daß die Regeleinheit (61) für beide Bremskreise in einem gemeinsamen Gehäuse (62) untergebracht ist, wobei beide Bremskreise bzw. die Räume (64 und 65 bzw. 83 und 84) durch einen verschiebbaren Kolben (66, 81, 81a) abgedichtet voneinander getrennt sind.

16. Bremsanlage nach Anspruch 15, dadurch gekennzeichnet, daß der Kolben sich beidseits in den Räumen (64 und 64 bzw. 83 und 84) über Federn (72 bzw. 85 und 86) gegen das Gehäuse (62,62a,62b) abstützt.

17. Bremsanlage nach Anspruch 16, dadurch gekennzeichnet, daß dem Kolben (66) beidseits ein Stangenstummel (68) angeformt und diesem eine Hülse (69) aufgeschoben ist, welche einen Ringflansch (70) besitzt, gegen den sich die Feder (72) abstützt.

18. Bremsanlage nach Anspruch 17, dadurch gekennzeichnet, daß in dem Ringflansch (70) Freinuten (78) ausgebildet sind, über die der Raum (64 bzw. 65) mit einem Ringraum (73,74) in Verbindung steht.

19. Bremsanlage nach Anspruch 18, dadurch gekennzeichnet, daß der Ringraum (73 bzw. 74) eine Radialbohrung (75,76) als Anschluß an die Anschlußleitung (11,11a) aufweist, welche von dem Kolben (66) nach Art eines Schieberventils verschließbar ist.

20. Bremsanlage nach Anspruch 16, dadurch gekennzeichnet, daß der Kolben (81a) von einer Kolbenstange (106) durchsetzt ist, über welche ein Einlaß (88,89) zur Anschlußleitung (11,11a) hin verschließbar ist.

21. Bremsanlage nach Anspruch 20, dadurch gekennzeichnet, daß die Kolbenstange (106) den Kolben (81a) bewegbar durchsetzt, wobei sie sich im Inneren des Kolbens (81a) über an einen Ringkragen (109) beidseits angreifende Federn (110,111) abstützt.

22. Bremsanlage nach Anspruch 16, dadurch gekennzeichnet, daß einem Auslaß (90,91) zur Bremsleitung (13,15) hin ein Ventilkörper (92) zugeordnet ist, der diesen Auslaß (90,91) beim Verschieben des Kolbens (81) verschließt.

23. Bremsanlage nach Anspruch 22, dadurch gekennzeichnet, daß der Ventilkörper (92) mit einem von Bohrungen (104,105) durchsetzten Dorn (93) in den Kolben (81) eingreift, welcher dort an eine Platte (94) anschließt, welche über eine Feder (97) auf einem Ventilsitz (96) gehalten ist.

24. Bremsanlage nach Anspruch 23, dadurch gekennzeichnet, daß nach Anheben der Platte (94) von dem Ventilsitz (96) eine Verbindung zwischen Bremsleitung (13,15) über die Bohrungen (104,105) zu einem Kanalsystem (99) hergestellt ist, welches in eine Kolbenkammer (100) einmündet, die andererseits eine Verbindungsbohrung (103) zum jeweiligen anderen Raum (83,84) des anderen Bremskreisen aufweist.

25. Bremsanlage nach Anspruch 24, dadurch gekennzeichnet, daß in der Kolbenkammer (100) ein Ausgleichskolben (101) gegen die Verbindungsbohrung (103) über eine Feder (102) vorgespannt lagert.

2155t

Fig.1

Fig.2

Fig.3

Fig.4

Fig.5